# EUROPÄISCHE PATENTSCHRIFT

(11) **EP 1 959 240 B1**
(45) Veröffentlichungstag und Bekanntmachung des Hinweises auf die Patenterteilung: **04.06.2014**
(21) Anmeldenummer: 07024089.0
(22) Anmeldetag: 12.12.2007
(51) Int. Cl.: G01D 5/347, G01D 5/245

(54) **Drehgeber und Verfahren zu dessen Betrieb**
Rotary encoder and method for its operation
Encodeur et son procédé de fonctionnement

(30) Priorität: 16.02.2007 DE 102007007764
(43) Veröffentlichungstag der Anmeldung: 20.08.2008
(73) Patentinhaber: Dr. Johannes Heidenhain GmbH, 83301 Traunreut (DE)
(72) Erfinder: Fischer, Peter, 83253 Rimsting (DE)

(56) Entgegenhaltungen:
- EP-A1- 0 724 712
- EP-A2- 1 607 720
- DE-A1-102005 009 489

## Beschreibung

Die Erfindung betrifft einen Drehgeber zur Bestimmung von Relativwinkelpositionen gemäß dem Anspruch 1, sowie ein Verfahren zu dessen Betrieb gemäß dem Anspruch 7.

Derartige Drehgeber werden häufig zur Bestimmung der Winkellage zweier relativ zueinander drehbaren Maschinenteile verwendet und arbeiten beispielsweise nach einem induktiven Messprinzip. Bei induktiven Drehgebern werden Erregerwindungen und Empfängerwindungen etwa in Form von Leiterbahnen auf einer gemeinsamen Leiterplatte aufgebracht, die beispielsweise mit einem Stator des Drehgebers fest verbunden ist. Dieser Leiterplatte gegenüber befindet sich in definiertem axialen Abstand und zentriert eine weitere Platine, die als Codeelement bzw. als vorzugsweise ringförmige Codescheibe ausgebildet ist, auf der in periodischen Abständen alternierend elektrisch leitfähige und nichtleitfähige Flächen als Teilungsbereich bzw. Teilungsstruktur aufgebracht sind, und welche mit dem Rotor des Drehgebers drehfest verbunden ist. Wenn an den Erregerwindungen ein zeitlich wechseindes elektrisches Erregerfeld angelegt wird, werden in den Empfängerwindungen während der Relativdrehung zwischen Rotor und Stator von deren Relativposition, also von der relativen Winkellage, abhängige Signale erzeugt. Diese Signale werden dann in einer Auswerteelektronik weiterverarbeitet.

Häufig werden solche Drehgeber als Messgeräte für elektrische Antriebe, zur Bestimmung der absoluten Winkellage von entsprechenden Antriebswellen, eingesetzt.

Aus der Patentanmeldung EP 1 906 153 A2 der Anmelderin, die als Stand der Technik unter den Artikel 54 (3) EPÜ fällt, ist ein induktiv arbeitender Drehgeber bekannt, bei dem durch ein spezielles Pulsverfahren ein Strom sparender Modus eingerichtet werden kann.

In der EP 1 607 720 A2 ist ein Lenkwinkelsensor beschrieben, der einen Impulsdraht aufweist, welcher genügend elektrische Energie zur autarken Aktivierung eines Zählspeichers bereitstellt.

Der vorliegenden Erfindung liegt die Aufgabe zu Grunde, einen Drehgeber, insbesondere einen induktiven Drehgeber, zu schaffen, dessen Stromverbrauch in einem vorgegebenen Betriebsmodus minimiert ist.

Diese Aufgabe wird erfindungsgemäß durch die Merkmale des Anspruches 1 bzw. 7 gelöst.

Demgemäß umfasst der Drehgeber eine erste Bauteilgruppe und eine zweite Bauteilgruppe, wobei die beiden Bauteilgruppen relativ um eine Achse zueinander drehbar angeordnet sind. Die erste Bauteilgruppe weist einen Impulsdraht, zumindest einen Detektor sowie eine elektronische Schaltung mit einem Logikschaltkreis und einem nicht-flüchtigen Speicher auf. Die zweite Bauteilgruppe weist ihrerseits einen Magneten und zumindest ein Codeelement auf. Bei Annäherung des Magneten an den Impulsdraht durch eine entsprechende relative Drehbewegung ist vom Impulsdraht ein Spannungspuls erzeugbar, Weiterhin ist abhängig von der Relativposition des Codeelements zu dem zumindest einen Detektor von diesem ein Signal erzeugbar, wobei durch den Logikschaltkreis, basierend auf dem Signal eine Positionsinformation ermittelbar ist, die im nicht-flüchtigen Speicher speicherbar ist. Dabei ist die erste Bauteilgruppe so konfiguriert, dass die Schaltung, ausgelöst durch das Auftreten des Spannungspulses mit einer Spannung einer Spannungsquelle beaufschlagbar ist wobei der Impulsdraht zur Spannungsquelle parallel geschaltet ist, so dass der Spannungspuls des Impulsdrahts zur Energieversorgung der Schaltung beiträgt, und die Schaltung spätestens nach dem Speichern der Positionsinformation im nicht-flüchtigen Speicher von dieser Spannungsquelle wieder trennbar ist.

Eine derartige Anordnung hat insbesondere den Vorteil, dass der Drehgeber nur Energie aus der Spannungsquelle zur Ermittlung und Speicherung der Positionsinformation verbraucht, wenn tatsächlich eine Drehbewegung stattfindet. Die Spannungsquelle kann mit Vorteil direkt im Drehgeber, insbesondere in der ersten Bauteilgruppe untergebracht sein, oder extern, so dass die von der Spannungsquelle gelieferte elektrische Energie über ein Kabel in den Drehgeber gelangen kann.

Häufig werden Drehgeber in einem "normalen" Betriebsmodus über das Stromnetz mit elektrischer Energie versorgt. Für den Fall, dass diese Versorgung unterbrochen ist, können die Drehgeber in einen zweiten Betriebsmodus übergehen, bei dem sie von einer anderen, redundanten Spannungsquelle, etwa einer Batterie versorgt werden. Die vorliegende Erfindung eignet sich insbesondere für Drehgeber, bei denen eine Umschaltung von einem ersten Betriebsmodus in einen zweiten Betriebsmodus möglich ist, wobei die elektrische Leistungsaufnahme des Drehgebers im zweiten Betriebsmodus kleiner ist als im ersten Betriebsmodus. Für den zweiten Betriebsmodus ist der Drehgeber entsprechend den erfindungsgemäßen Merkmalen konfiguriert, insbesondere ist die erste Bauteilgruppe so konfiguriert, dass im zweiten Betriebsmodus die Schaltung, ausgelöst durch das Auftreten des Spannungspulses mit einer Spannung einer Spannungsquelle beaufschlagbar ist und die Schaltung spätestens nach dem Speichern der Positionsinformation im nicht-flüchtigen Speicher von dieser Spannungsquelle wieder trennbar ist.

Die Positionsinformation stellt die Information über die Relativposition, also über Winkellage, der ersten Bauteilgruppe relativ zur zweiten Bauteilgruppe dar und kann beispielsweise in Winkelgraden angegeben werden. Bevorzugt ist die erste Bauteilgruppe als Stator und die zweite Bauteilgruppe als Rotor ausgebildet.

In weiterer Ausgestaltung der Erfindung kann die erste Bauteilgruppe einen Emitter umfassen, durch welchen ein elektromagnetisches Feld erzeugbar ist, das durch das zumindest eine Codeelement modulierbar ist, so dass abhängig von der Relativposition des Codeelements zu dem zumindest einen Detektor ein Signal erzeugbar ist. Dabei ist die erste Bauteilgruppe so konfiguriert, dass der Emitter, ausgelöst durch das Auftreten des Spannungspulses, mit einer Spannung einer Spannungsquelle beaufschlagbar ist und der Emitter spätestens nach dem Speichern der Positionsinformation im nicht-flüchtigen Speicher von der Spannungsquelle wieder trennbar ist.

Mit Vorteil umfasst der Emitter eine Erregerwindung durch die ein elektromagnetisches Feld erzeugbar ist, wobei dann der zumindest eine Detektor als eine Empfängerwindung ausgestaltet ist. Bei dieser Ausgestaltung arbeitet der Drehgeber nach einem induktiven Messprinzip. Alternativ hierzu kann die Erfindung auch bei einem kapazitiven oder optischen Drehgeber angewendet werden. Bei einem optischen Drehgeber kann dann der Emitter eine Lichtquelle umfassen und der zumindest eine Detektor als ein Fotoelement ausgestaltet sein.

Insbesondere ist es vorteilhaft, wenn in Abwandlung der Erfindung die erste Bauteilgruppe so konfiguriert ist, dass der zumindest eine Detektor, ausgelöst durch das Auftreten des Spannungspulses, mit einer Spannung einer Spannungsquelle beaufschlagbar ist und von der Spannungsquelle wieder trennbar ist. Auf diese Weise wird nicht nur die Betriebszeit der Schaltung mit dem Logikschaltkreis und dem nicht-flüchtigen Speicher minimiert, sondern es wird auch die Anschaltzeit des zumindest einen Detektors auf ein Minimum reduziert.

Mit Vorteil ist das zumindest eine Codeelement als ein Magnet ausgestaltet und der zumindest eine Detektor ein MR- oder Hall-Element.

Die Erfindung betrifft unter anderem Drehgeber, die so konfiguriert sind, dass der Spannungspuls des Impulsdrahtes keinen Beitrag zur eigentlichen Bestimmung der Positionsinformation im engeren Sinn liefert, sondern nur bezüglich der Zuschaltung der Spannungsquelle zur Energieversorgung relevant ist. In Abwandlung dieser Ausführung kann aber auch der Drehgeber so konfiguriert sein, dass das Auftreten des Spannungspulses zudem für die Bestimmung der Positionsinformation, insbesondere zur Richtungserkennung, zusammen mit dem Signal eines Detektors verwendet wird.

Weiterhin umfasst die Erfindung ein Verfahren zum Betrieb eines Drehgebers, bei dem der Drehgeber eine erste Bauteilgruppe und eine zweite Bauteilgruppe umfasst und die Bauteilgruppen relativ um eine Achse drehbar angeordnet sind. Die erste Bauteilgruppe weist einen Impulsdraht, zumindest einen Detektor sowie eine elektronische Schaltung mit einem Logikschaltkreis und einem nicht-flüchtigen Speicher auf. Die zweite Bauteilgruppe weist ihrerseits einen Magneten und zumindest ein Codeelement auf. Es wird bei Annäherung des Magneten an den Impulsdraht vom Impulsdraht ein Spannungspuls erzeugt. Danach wird, abhängig von der Relativposition des Codeelements zu dem zumindest einen Detektor von diesem ein Signal erzeugt. Basierend auf dem Signal des Detektors wird sodann durch den Logikschaltkreis eine Positionsinformation ermittelt, die im nächsten Schritt im nicht-flüchtigen Speicher gespeichert wird. Das Auftreten des Spannungspulses löst aus, dass die Schaltung mit einer Spannung einer Spannungsquelle beaufschlagt wird, und der Impulsdraht zur Spannungsquelle parallel geschaltet ist, so dass der Spannungspuls des Impulsdrahts zur Energieversorgung der Schaltung beiträgt, wobei spätestens nach dem Speichern der Positionsinformation im nicht-flüchtigen Speicher die Schaltung wieder von der Spannungsquelle getrennt wird.

Mit Vorteil schaltet der Drehgeber vom ersten Betriebsmodus in den zweiten automatisch um, wobei im zweiten Betriebsmodus das erfindungsgemäße Verfahren angewendet wird.

Häufig kann eine zweite Bauteilgruppe Codeelemente in mehreren Teilungsspuren aufweisen, die unterschiedlich fein sind und daher bei deren Abtastung durch die Detektoren unterschiedliche Anzahlen von Signalperioden pro einer Relativumdrehung liefern. In einer Variante der Erfindung ist der Drehgeber so konfiguriert, dass in dem Betriebsmodus, in welchem die Schaltung mit einer Spannung der Spannungsquelle beaufschlagbar ist nur diejenige Teilungsspur abtastbar ist, welche die geringste Anzahl von Signalperioden pro einer Relativumdrehung liefert. Gemäß einer Abwandlung können auch zur Erhöhung der Messgenauigkeit mehrere Teilungsspuren im dem besagten Zustand abtastbar sein:

Vorteilhafte Ausbildungen der Erfindung entnimmt man den abhängigen Ansprüchen.

Weitere Einzelheiten und Vorteile des erfindungsgemäßen Drehgebers ergeben sich aus der nachfolgenden Beschreibung von Ausführungsbeispielen, anhand der beiliegenden Figuren.

Es zeigen die
- Figur 1: eine Schnittdarstellung durch einen Drehgeber,
- Figur 2: eine Draufsicht auf eine Codescheibe,
- Figur 3: eine Draufsicht auf eine Abtastleiterplatte,
- Figur 4: eine schematische Schaltungsanordnung gemäß einem ersten Ausführungsbeispiel für einen induktiven Drehgeber,
- Figur 5: eine schematische Schaltungsanordnung gemäß einem zweiten Ausführungsbeispiel,
- Figur 6: eine schematische Schaltungsanordnung gemäß einem dritten Ausführungsbeispiel für einen optischen Drehgeber,
- Figur 7: eine schematische Schaltungsanordnung gemäß einem vierten Ausführungsbeispiel für einen magnetisch wirkenden Drehgeber.

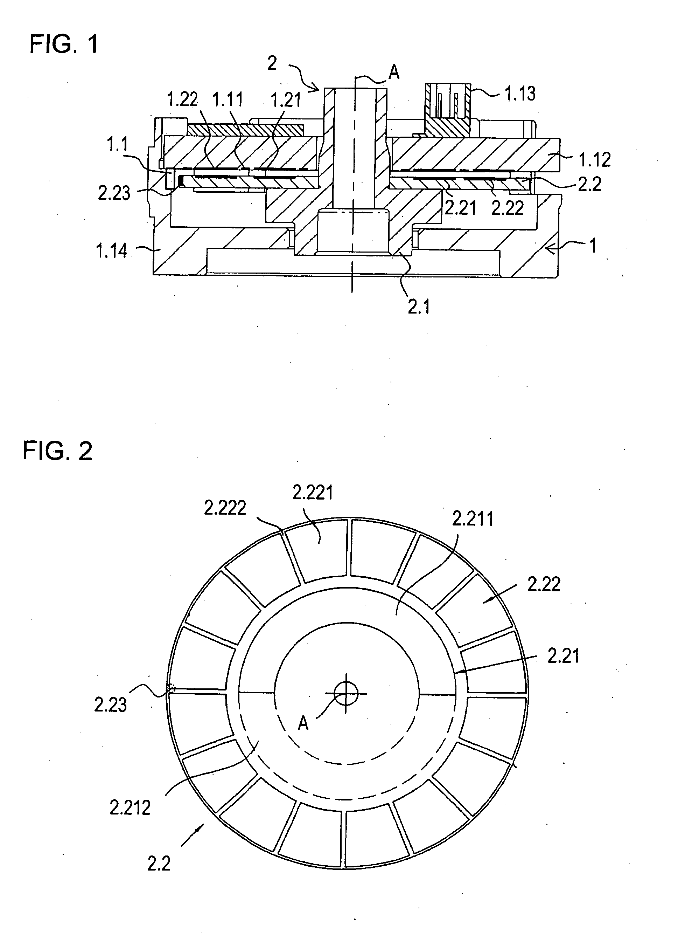

In der Figur 1 ist eine Schnittdarstellung durch einen Drehgeber gemäß einem Ausführungsbeispiel dargestellt. Der Drehgeber umfasst demnach eine erste Bauteilgruppe, hier in der Funktion eines Stators 1 und eine zweite Bauteilgruppe, hier als ein Rotor 2 wirkend. Rotor 2 und Stator 1 sind um eine Achse A relativ zueinander drehbar angeordnet.

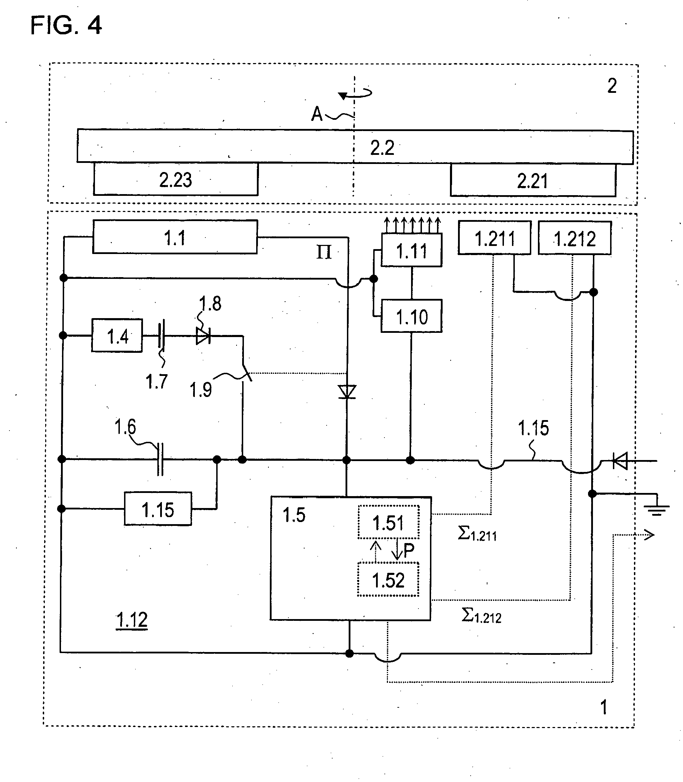

Der Stator 1 umfasst ein Gehäuse 1.14, an dem eine ringförmige Abtastleiterplatte 1.12 befestigt ist. Unter anderem ist auf der Abtastleiterplatte 1.12 ein Steckverbinder 1.13 montiert, durch welchen Signale und elektrische Leistung zwischen dem Drehgeber und einer Folgeelektronik übertragen werden können. Ferner sind auf der Abtastleiterplatte 1.12, gemäß der Figur 4, ein Impulsdraht 1.1 und Bauelemente einer elektronischen Schaltung 1.5, sowie einer Erregerschaltung 1.10 angeordnet. Auf der Abtastleiterplatte 1.12 befindet sich außerdem eine Spannungsquelle in Form einer Batterie 1.7.

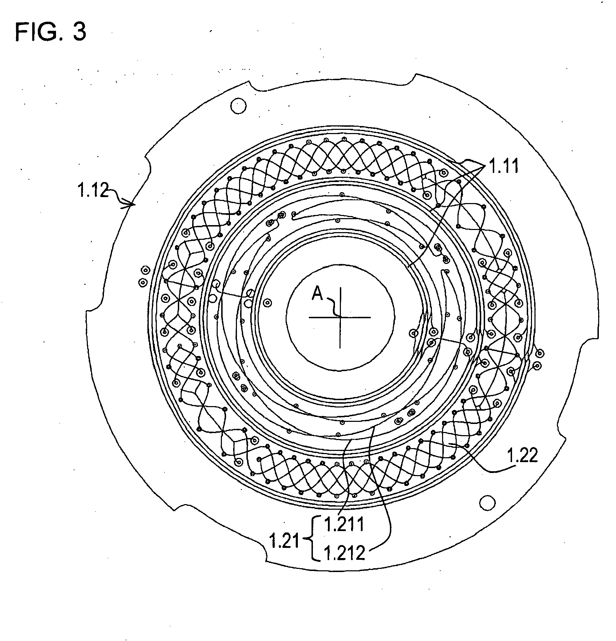

Zudem sind gemäß der Figur 3 als Erregerwindungen bzw. als Emitter an der anderen Seite der Abtastleiterplatte 1.12 Erregerleiterbahnen 1.11 vorgesehen, welche auf einer inneren, einer mittleren und einer äußeren Erregerspur aufgebracht sind. Die Abtastleiterplatte 1.12 selbst weist eine zentrische Bohrung auf und ist mehrlagig ausgeführt. Die Abtastleiterplatte 1.12 dient als Trägerkörper für Detektoren, welche hier aus verschiedenen Empfängerwindungen 1.21, 1.22 bestehen. Die inneren Empfängerwindungen 1.21 umfassen eine erste Empfängerleiterbahn 1.211 und eine zweite Empfängerleiterbahn 1.212. Innerhalb einer Umdrehung liefert sowohl die erste Empfängerleiterbahn 1.211 als auch die zweite Empfängerleiterbahn 1.212 jeweils eine Signalperiode, wobei das Signal der ersten Empfängerleiterbahn 1.211 um 90° gegenüber dem der zweiten Empfängerleiterbahn 1.212 verschoben ist.

Die äußeren Empfängerwindungen 1.22 bestehen ebenfalls aus zwei Empfängerleiterbahnen und sind so ausgestaltet, dass diese zwei um 90° versetzte Signale liefern, die pro Umdrehung sechzehn Signalperioden umfassen.

Im vorgestellten Ausführungsbeispiel umfasst der Rotor 2 eine Welle 2.1, welche beispielsweise an einer zu messenden Motorwelle drehfest montiert werden kann. An einem Absatz der Welle 2.1 ist zur Erfassung ihrer Relativposition, bzw. ihrer Winkellage ein Codeelement, hier als eine Codescheibe 2.2 ausgebildet, mit Teilungsspuren 2.21, 2.22 drehfest festgelegt.

In der Figur 2 ist die Codescheibe 2.2 in einer Draufsicht gezeigt. Die Codescheibe 2.2. besteht aus einem Substrat, welches im dargestellten Ausführungsbeispiel aus Epoxydharz hergestellt ist und auf dem zwei Teilungsspuren 2.21, 2.22 angeordnet sind. Die Teilungsspuren 2.21, 2.22 sind ringförmig ausgebildet und bezüglich der Drehachse A konzentrisch mit unterschiedlichem Durchmesser auf dem Substrat angeordnet. Die beiden Teilungsspuren 2.21, 2.22 bestehen jeweils aus einer periodischen Abfolge von alternierend angeordneten elektrisch leitfähigen Teilungsbereichen 2.211, 2.221 und nichtleitfähigen Teilungsbereichen 2.212, 2.222. Als Material für die elektrisch leitfähigen Teilungsbereiche 2.211, 2.221 wurde im gezeigten Beispiel Kupfer auf das Substrat aufgebracht. In den nichtleitfähigen Teilungsbereichen 2.212, 2.222 wurde das Substrat dagegen nicht beschichtet.

Die innere Teilungsspur 2.21 besteht in der dargestellten Ausführungsform aus einem ersten halbringförmigen Teilungsbereich 2.211 mit elektrisch leitfähigem Material, hier Kupfer, sowie einem zweiten halbringförmigen Teilungsbereich 2.212, in dem kein leitfähiges Material angeordnet ist.

Radial benachbart zur ersten Teilungsspur 2.21 liegt die zweite Teilungsspur 2.22 auf dem Substrat, wobei auch die Teilungsspur 2.22 aus einer Vielzahl elektrisch leitfähiger Teilungsbereiche 2.221 sowie dazwischen angeordneten nichtleitfähigen Teilungsbereichen 2.222 besteht. Die verschiedenen Teilungsbereiche 2.221, 2.222 sind materialmäßig dabei ebenso ausgebildet wie die Teilungsbereiche 2.211, 2.212 der ersten Teilungsspur 2.21. Insgesamt umfasst die zweite Teilungsspur 2.22 im dargestellten Ausführungsbeispiel sechzehn periodisch angeordnete, elektrisch leitfähige Teilungsbereiche 2.221 sowie entsprechend sechzehn dazwischen angeordnete nichtleitfähige Teilungsbereiche 2.222.

Ferner weist die Codescheibe 2.2 einen Magneten 2.23 auf, welcher am Rand der Codescheibe 2.2 angeordnet ist und in einer Richtung parallel zur Achse A magnetisiert ist.

Im zusammengebauten Zustand des Drehgebers stehen sich die Codescheibe 2.2 und die Abtastleiterplatte 1.12 in axialem Abstand gegenüber, so dass die Achse A durch die Mittelpunkte beider Elemente verläuft und bei einer Relativdrehung zwischen Codescheibe 2.2 und Abtastleiterplatte 1.12 von der jeweiligen Winkelstellung abhängige Signale Σ_{1.211}, Σ_{1.212} durch In-duktionseffekte erzeugbar sind. Ferner sind der Impulsdraht 1.1 und der Magnet 2.23 so zueinander angeordnet, dass bei Annäherung des Magneten 2.23 an den Impulsdraht 1:1 vom lmpulsdraht 1.1 ein Spannungspuls Π erzeugbar ist. Alternativ kann der Magnet 2.23 auch direkt an der Welle 2.1 befestigt sein, wobei dann der Impulsdraht 1.1 im radial inneren Bereich des Drehgebers angeordnet wäre. Weiterhin könnte der Magnet auch radial an der Unterseite (bezogen auf die Fig. 1) der Codescheibe 2.2 angebracht sein. In Abwandlung des vorgestellten Ausführungsbeispiels könnte dann der lmpulsdraht am Gehäuse 1.14 unterhalb (Fig. 1) der Codescheibe 2.2 montiert sein und in elektrischen Kontakt zur Abtastleiterplatte 1.12 gebracht sein.

Vorraussetzung für die Bildung von entsprechenden Signalen Σ_{1.211}, Σ_{1.212} ist es, dass die Erregerleiterbahnen 1.11 ein zeitlich wechselndes elektromagnetisches Erregerfeld im Bereich der Abtastspuren bzw. im Bereich der damit abgetasteten Teilungsspuren 2.21 und 2.22 erzeugen bzw. emittieren. Im dargestellten Ausführungsbeispiel sind die Erregerleiterbahnen 1.11 als mehrere, planar-parallele Einzel-Leiterbahnen ausgebildet. Werden die Erregerleiterbahnen 1.11 allesamt in der gleichen Richtung von einem Erregerstrom durchflossen, so bildet sich um die jeweiligen Erregerleiterbahnen 1.11 ein schlauch- bzw. zylinderförmig orientiertes elektromagnetisches Feld aus. Die Feldlinien des resultierenden elektromagnetischen Feldes verlaufen in Form konzentrischer Kreise um die Erregerleiterbahnen 1.11, wobei die Richtung der Feldlinien in bekannter Art und Weise von der Stromrichtung in den Erregerleiterbahnen 1.11 abhängt. Die Stromrichtung der unmittelbar an eine gemeinsame Abtastspur angrenzenden Erregerleiterbahnen 1.11 bzw. die entsprechende Verschaltung der Erregerleiterbahnen 1.11 ist dabei entgegengesetzt zu wählen, so dass die Feldlinien im Bereich der Teilungsspuren 2.21, 2.22 jeweils identisch orientiert sind.

In einem ersten Betriebsmodus, der dem Normalbetrieb entspricht, wird der Drehgeber von außen über ein Kabel und dem Steckverbinder 1.13 mit Strom versorgt, so dass durch die Leitung 1.15 (Figur 4) der extern zugeführte Strom fließt. In diesem ersten Betriebsmodus wird die Erregerschaltung 1.10 ständig bestromt, so dass auch die Erregerleiterbahnen 1.11 ständig von einem Erregerstrom durchflossen werden, unabhängig davon, ob die Welle 2.1 rotiert oder steht. Durch die elektronische Schaltung 1.5 werden laufend Signale Σ_{1.211} und Σ_{1.212} der Empfängerleiterbahnen 1.211, 1.212 aufgenommen und in einem Logikschaltkreis 1.51 verarbeitet. Vom Logikschaltkreis 1.51, durch den auch eine Richtungserkennung erfolgt, wird eine Positionsinformation P an einen nicht-flüchtigen Speicher 1.52 übergeben und dort gespeichert. Im vorliegenden Ausführungsbeispiel wird als nichtflüchtiger Speicher 1.52 ein so genannter Ferroelectric Random Access Memory (FRAM oder FeRAM) verwendet. Alternativ dazu kann auch ein Magneto-resistive Random Access Memory (MRAM) verwendet werden. Die nicht-flüchtigen Speicher 1.52 sollten grundsätzlich eine vielfache Wiederbeschreibbarkeit aufweisen.

Es kann vorkommen, dass aus irgendeinem Grund die externe Netzstromversorgung nicht zur Verfügung steht oder unterbrochen wird. In diesem Fall wird der Drehgeber automatisch in einen zweiten Betriebsmodus versetzt, bei dem der Drehgeber vorübergehend durch eine Spannungsquelle, hier in Form einer Batterie 1.7 mit elektrischer Energie versorgt wird. In diesem Zustand ist im Hinblick auf die Lebensdauer der Batterie 1.7 ein möglichst geringer Energieverbrauch geboten und es ist besonders wichtig, dass zumindest eine grobe Relativposition weiterhin erfasst werden kann. Aus diesem Grund beschränkt sich der Betrieb im vorgestellten Ausführungsbeispiel auf die Abtastung der inneren Teilungsspuren 2.21 durch die Empfängerleiterbahnen 1.211, 1.212. Wenn die Welle 2.1, bzw. der Rotor 2 steht, so bleibt ein Schalter 1.9, z. B. als Transistor ausgestaltet, offen und die Batterie 1.7 wird nicht entladen. Die ursprünglich im nicht-flüchtigen Speicher 1.52 gespeicherte Positionsinformation P bleibt erhalten. Häufig tritt der zweite Betriebsmodus ein, wenn das Stromnetz ausgefallen ist. In diesem Fall wird meistens auch die Welle 2.1 bzw. der daran befestigte Antrieb stehen bleiben.

Es kann aber auch sein, dass sich die Welle 2.1, etwa unter dem Einfluss von Lasten an dem betreffenden Antrieb, weiter dreht. Sobald sich der Magnet 2.23 dem Impulsdraht 1.1 nähert, erzeugt der Impulsdraht 1.1 einen Spannungspuls II. Wenn der Spannungspuls II eine vorgegebene Spannungsschwelle erreicht, wird ein Schließen des Schalters 1.9 ausgelöst, so dass die Batterie 1.7 über eine Diode 1.8 Strom abgibt. Im Übrigen ist der andere Pol der Batterie 1.7 über einen Widerstand 1.4 mit dem Nullpotenzial verbunden. Der Strom der Batterie 1.7, erhöht durch den Spannungspuls Π aus dem Impulsdraht 1.1, dient einerseits dazu einen Pufferkondensator 1.6 zu laden, wobei die maximal auftretende Spannung durch einen Spannungsbegrenzer 1.15 limitiert wird. Andererseits wird durch den Strom die Erregerschaltung 1.10, sowie die elektronische Schaltung 1.5 betrieben. Die Erregerschaltung 1.10 prägt einen Erregerstrom, der auch als Puls ausgestaltet sein kann, in die Erregerleiterbahnen 1.11 ein. Abhängig von der Relativposition der Codescheibe 2.2 bezüglich den Empfängerleiterbahnen 1.211, 1.212 werden entsprechende Signale Σ_{1.211} und Σ_{1.212} von den Empfängerleiterbahnen 1.211, 1.212 erzeugt. Diese Signale Σ_{1.211}, Σ_{1.212} werden dann an die Schaltung 1.5 geleitet und dort im Logikschaltkreis 1.51 unter Berücksichtigung eines Richtungserkennungsalgorithmus verarbeitet. Vom Logikschaltkreis 1.51 wird danach eine Positionsinformation P an einen nicht-flüchtigen Speicher 1.52 übergeben und dort gespeichert. Nachdem der Spannungspuls II wieder abgeklungen ist, bzw. nachdem der Spannungspuls II eine vorgegebene Spannungsschwelle unterschritten hat, öffnet sich der Schalter 1.9 wieder und die Batterie 1.7 gibt jetzt keine Ladung mehr ab. Mit anderen Worten wird u. a. die Schaltung 1.5 spätestens nach dem Speichern der Positionsinformation P im nicht-flüchtigen Speicher 1.52 von der Spannungsquelle 1.7 wieder getrennt. Dabei kann der Schalter 1.9 aber auch schon vor dem Speichern der Positionsinformation P im nicht-flüchtigen Speicher 1.52 geöffnet werden, etwa dann, wenn durch den Pufferkondensator 1.6 die Energie für das Speichern der Positionsinformation P im nicht-flüchtigen Speicher 1.52 bereitgestellt werden kann.

Insbesondere wird durch diese Vorrichtung und durch die beschriebene Methode die Batterie 1.7 also nur belastet, wenn ein relevantes Ereignis, d.h. eine Bewegung der Welle 2.1 eintritt. Insbesondere dadurch, dass der Impulsdraht 1.1 zur Spannungsquelle 1.7 parallel geschaltet ist, trägt der Impulsdraht 1.1 zur Energieversorgung der Schaltung 1.5 bei. Darüber hinaus wird die von der Batterie 1.7 abfließende Ladung minimiert, weil die Energie des Spannungspulses Π unterstützend zugeschaltet ist. Der Pufferkondensator 1.6 limitiert die maximal auftretende Spannung und stellt noch elektrischen Strom zur Verfügung, wenn der Schalter 1.9 schon wieder geschlossen sein sollte.

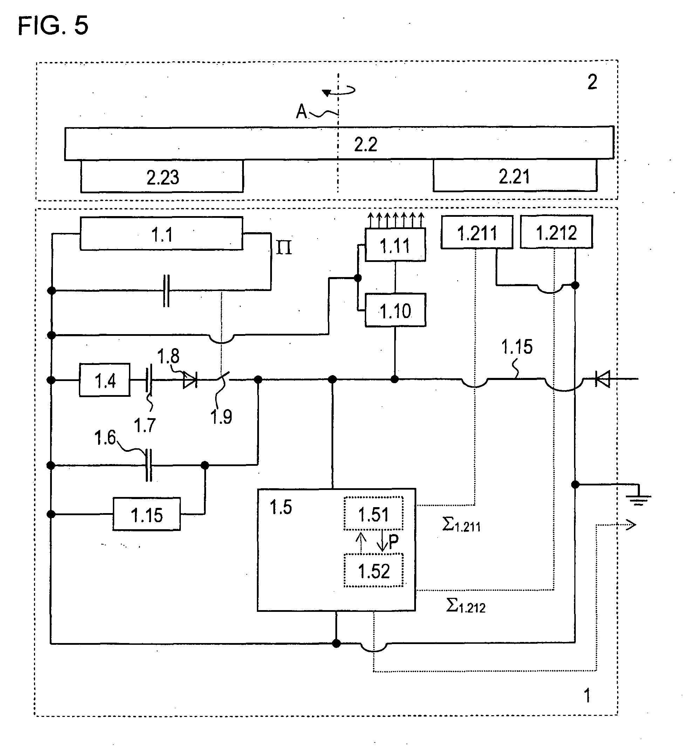

In der Figur 5 ist ein weiteres Ausführungsbeispiel gezeigt, das sich vom vorhergehend beschriebenen durch eine vereinfachte Schaltung unterscheidet. In diesem Beispiel trägt nunmehr der Spannungspuls Π des Impulsdrahts 1.1 nicht mehr zur Energieversorgung des Drehgebers bei, sondern dient im Wesentlichen nur noch zur Ansteuerung des Schalters 1.9. Alternativ dazu kann die Schaltung durch Weggelassen des Pufferkondensators 1.6 noch weiter vereinfacht werden. Die erwähnten Vereinfachungen der Schaltung sind auch für die unten beschriebenen Ausführungsbeispiele anwendbar.

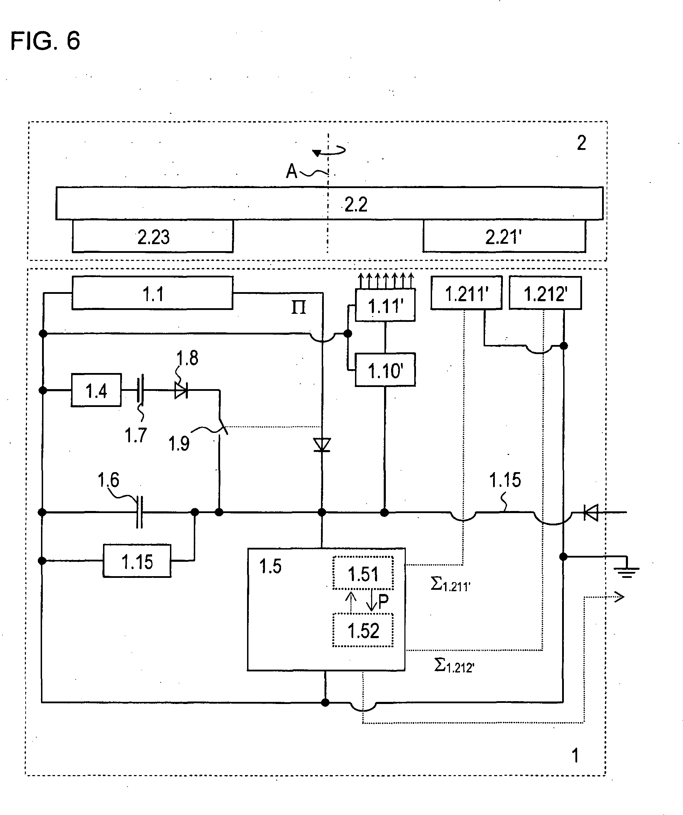

Gemäß einem weiteren Ausführungsbeispiel kann die Erfindung auch in einem optischen Drehgeber implementiert werden. Eine entsprechende schematische Schaltung ist in der Figur 6 dargestellt. Die Erregerschaltung ist nun als eine Treiberschaltung 1.10' für eine Lichtquelle 1.11', die als Emitter dient, ausgestaltet. Das Licht der Lichtquelle 1.11' trifft auf eine optische Teilung 2.21' und wird abhängig von der Winkelstellung der Welle 2.1 bzw. von der Relativposition der Teilung 2.21' zu Fotoelementen 1.211', 1.212' moduliert. Das modulierte Licht wird von den zwei Fotoelementen 1.211', 1.212' empfangen und in elektrische Signale Σ_{1.211'}, Σ_{1.212'} umgewandelt. Die Fotoelemente 1.211', 1.212' sind geometrisch so angeordnet, dass die Signale Σ_{1.211'}, Σ_{1.212'} um 90° phasenversetzt sind.

Wenn die externe Stromversorgung nicht zur Verfügung steht, geht auch hier der Drehgeber in einen zweiten Betriebsmodus über, unter Heranziehung der Batterie 1.7 als Spannungsquelle. Steht die Welle 2.1, bzw. der Rotor 2, so bleibt auch hier der Schalter 1.9 offen und die Batterie 1.7 wird nicht belastet. Die ursprünglich im nicht-flüchtigen Speicher 1.52 gespeicherte Positionsinformation P bleibt erhalten.

Sobald sich nun die Welle 2.1 dreht und sich der Magnet 2.23 dem Impulsdraht 1.1 nähert, erzeugt der Impulsdraht 1.1, wie bereits im ersten Ausführungsbeispiel beschrieben, einen Spannungspuls Π. Der Spannungspuls Π löst das Schließen des Schalters 1.9 aus, so dass die Batterie 1.7, unterstützt durch den Energieinhalt des Spannungspulses II aus dem Impulsdraht 1.1, Strom u. a. an die Treiberschaltung 1.10' und die elektronische Schaltung 1.5 abgibt.

Die Treiberschaltung 1.10' führt ihrerseits herbei, dass die Lichtquelle 1.11' einen Lichtpuls emittiert. Abhängig von der Relativposition der optischen Teilung 2.21' zu den Fotoelementen 1.211', 1.212' werden entsprechende Signale Σ_{1.211'} und Σ_{1.212'} von den Fotoelementen 1.211', 1.212' erzeugt. Diese Signale Σ_{1.211'}, Σ_{1.212'} werden dann an die Schaltung 1.5 geleitet und dort im Logikschaltkreis 1.51 unter Berücksichtigung eines Richtungserkennungsalgorithmus verarbeitet. Vom Logikschaltkreis 1.51 wird danach eine Positionsinformation P an einen nicht-flüchtigen Speicher 1.52 übergeben und dort gespeichert. Nachdem der Spannungspuls II wieder abgeklungen ist, öffnet sich der Schalter 1.9 wieder und die Batterie 1.7 gibt jetzt keine Ladung mehr ab.

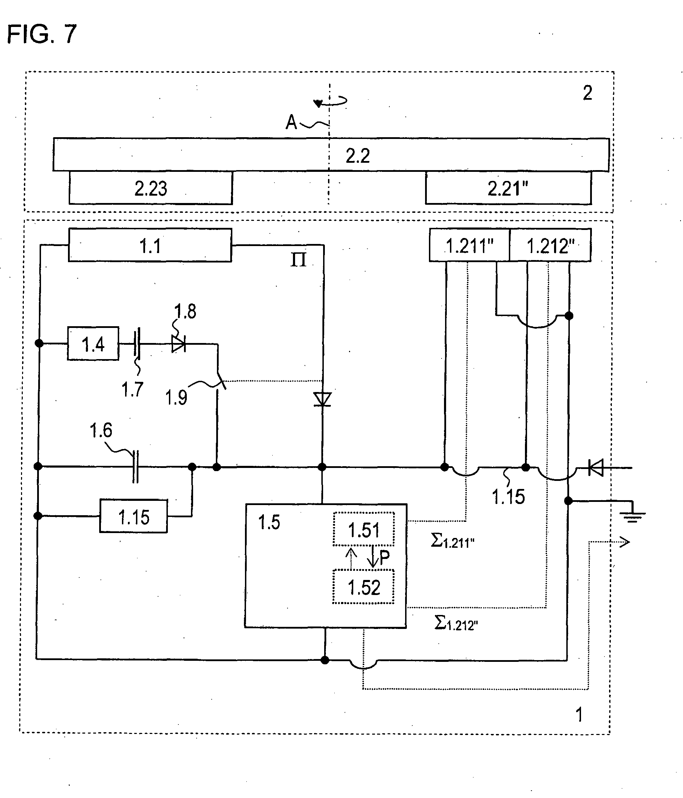

Gemäß der Figur 7 ist ein weiteres Ausführungsbeispiel gezeigt. Im unterschied zu den vorherigen Ausführungsbeispielen sind nunmehr aktive Empfängerelemente in Form von MR-Sensoren 1.211 ", 1.212" am Stator 1 angeordnet. Diesen MR-Sensoren 1.211", 1.212" gegenüberliegend ist eine magnetische Teilungsspur 2.21". Diese Teilungsspur 2.21" kann entweder aus einem Stück magnetisierbaren Material bestehen, das ein vorgegebenes Magnetisierungsmuster aufweist, oder aber sie kann aus einzelnen separaten Magneten bestehen. Die MR-Sensoren 1.211", 1.212" erzeugen Signale Σ_{1.211"}, Σ_{1.212"}, die abhängig von der Relativposition zwischen Codescheibe 2.2 und Stator 1 sind. Die Funktionsweise ist für den Fall, dass die externe Stromversorgung nicht zur Verfügung steht analog zu den oben beschriebenen Beispielen. Allerdings wird in diesem Fall die elektrische Energie auch für den Betrieb der MR-Sensoren 1.211 ", 1.212" verwendet, dagegen muss hier kein elektromagnetisches Feld bzw. Licht erzeugt werden.

Im Übrigen kann bei allen Ausführungsbeispielen das Auftreten des Spannungspulses II auch zur Bestimmung der Winkelstellung bzw. Relativposition zwischen Codescheibe 2.2 und Stator 1 in der elektronischen Schaltung 1.5 zusätzlich berücksichtigt werden. In diesem Fall kann die Anzahl der Detektoren reduziert werden.

## Patentansprüche

1. Drehgeber umfassend eine erste Bauteilgruppe (1) und eine zweite Bauteilgruppe (2), wobei die Bauteilgruppen (1, 2) relativ um eine Achse (A) zueinander drehbar angeordnet sind, und
die erste Bauteilgruppe (1)
· einen Impulsdraht (1.1),
. zumindest einen Detektor (1.211, 1.212; 1.211', 1.212'; 1.211", 1.212"), sowie
eine elektronische Schaltung (1.5) mit einem Logikschaltkreis (1.51) und einem nicht-flüchtigen Speicher (1.52) aufweist,
die zweite Bauteilgruppe (2)
· eine Magneten (2.23) und
· zumindest ein Codeelement (2.21; 2.21'; 2.21") aufweist, wobei
bei Annäherung des Magneten (2.23) an den Impulsdraht (1.1) vom Impulsdraht (1.1) ein Spannungspuls (II) erzeugbar ist, und
abhängig von der Relativposition des Codeelements (2.21; 2.21'; 2.21") zu dem zumindest einen Detektor (1.211, 1.212; 1.211', 1.212'; 1.211", 1.212") von diesem ein Signal (Σ_{1.211}, Σ_{1.222}, Σ_{1.211}', Σ_{1.222}';
Σ_{1.211}", Σ_{1.222}") erzeugbar ist, wobei durch den Logikschaltkreis (1.51), basierend auf dem Signal (Σ_{1.211}, Σ_{1.222}; Σ_{1.211}', Σ_{1.222}'; Σ_{1.211}", Σ_{1.222}") eine Positionsinformation (P) ermittelbar ist, die im nicht-flüchtigen Speicher (1.52) speicherbar ist, **dadurch gekennzeichnet, dass**
die erste Bauteilgruppe (1) so konfiguriert ist, dass
die Schaltung (1.5), ausgelöst durch das Auftreten des Spannungspulses (Π), mit einer Spannung einer Spannungsquelie (1.7) beaufschlagbar ist, wobei der Impulsdraht (1.1) zur Spannungsquelle (1.7) parallel geschaltet ist, so dass der Spannungspuls (Π) des Impulsdrahts (1.1) zur Energieversorgung der Schaltung (1.5) beiträgt, und die Schaltung (1.5) spätestens nach dem Speichern der Positionsinformation (P) im nicht-flüchtigen Speicher (1.52) von der Spannungsquelle (1.7) wieder trennbar ist.

2. Drehgeber gemäß dem Anspruch 1, **dadurch gekennzeichnet, dass** die erste Bauteilgruppe (1) einen Emitter (1.11; 1.11') umfasst, durch welchen ein elektromagnetisches Feld erzeugbar ist, das durch das zumindest eine Codeelement (2.21; 2.21') modulierbar ist, so dass abhängig von der Relativposition des Codeelements (2.21; 2.21') zu dem zumindest einen Detektor (1.211, 1.212; 1.211'; 1.212') von diesem ein Signal (Σ_{1.211}, Σ_{1.222}; Σ_{1.211}', Σ_{1.222}') erzeugbar ist, wobei die erste Bauteilgruppe (1) so konfiguriert ist, dass der Emitter (1.11; 1.11')
· ausgelöst durch das Auftreten des Spannungspulses (II), mit einer Spannung einer Spannungsquelle (1.7) beaufschlagbar ist und
· spätestens nach dem Speichern der Positionsinformation (P) im nicht-flüchtigen Speicher (1.52) von der Spannungsquelle (1.7) wieder trennbar ist.

3. Drehgeber gemäß dem Anspruch 2, **dadurch gekennzeichnet, dass** der Emitter (1,11) eine Erregerwindung umfasst, durch die ein elektromagnetisches Feld erzeugbar ist und der zumindest eine Detektor (1.211, 1.212) als eine Empfängervuindung ausgestaltet ist.

4. Drehgeber gemäß dem Anspruch 2, **dadurch gekennzeichnet, dass** der Emitter (1.11') eine Lichtquelle umfasst, und der zumindest eine Detektor (1.211'; 1.212') als ein Fotoelement ausgestaltet ist.

5. Drehgeber gemäß dem Anspruch 1, **dadurch gekennzeichnet, dass** die erste Bauteilgruppe (1) so konfiguriert ist, dass der zumindest eine Detektor (1.211", 1.212"), ausgelöst durch das Auftreten des Spannungspulses (II), mit einer Spannung einer Spannungsquelle (1.7) beaufschlagbar ist und von der Spannungsquelle (1.7) wieder trennbar ist.

6. Drehgeber gemäß dem Anspruch 5, **dadurch gekennzeichnet, dass** das zumindest eine Codeelement (2.21") als ein Magnet ausgestaltet ist und der zumindest eine Detektor (1.211", 1.212") ein MR- oder Hall-Element ist.

7. Verfahren zum Betrieb eines Drehgebers, wobei der Drehgeber eine erste Bauteilgruppe (1) und eine zweite Bauteilgruppe (2) umfasst und die Bauteilgruppen (1, 2) relativ um eine Achse (A) zueinander drehbar angeordnet sind, und
die erste Bauteilgruppe (1)
· einen Impulsdraht (1.1),
· zumindest einen Detektor (1.211, 1.212; 1.211', 1.212'; 1.211", 1.212"; ), sowie
· eine elektronische Schaltung (1.5) mit einem Logikschaltkreis (1.51) und einem nicht-flüchtigen Speicher (1.52) aufweist,
die zweite Bauteilgruppe (2)
· einen Magneten (2.23) und
· zumindest ein Codeelement (2.21; 2.21'; 2.21") aufweist, wobei
bei Annäherung des Magneten (2.23) an den Impulsdraht (1,1) vom Impulsdraht (1.1) ein Spannungspuls (II) erzeugt wird, und
abhängig von der Relativposition des Codeelements (2.21; 2.21'; 2.21") zu dem zumindest einen Detektor (1.211, 1.212; 1.211', 1.212'; 1.211", 1.212") von diesem ein Signal (Σ_{1.211}, Σ_{1.222}; Σ_{1.211}', Σ_{1.222}'; Σ_{1.211}", Σ_{1.222}") erzeugt wird, wobei durch den Logikschaltkreis (1.51), basierend auf dem Signal (Σ_{1.211}, Σ_{1.222}; Σ_{1.211}', Σ_{1.222}'; Σ_{1.211}", Σ_{1.222}") eine Positionsinformation (P) ermittelt wird, die im nicht-flüchtigen Speicher (1.52) gespeichert wird, **dadurch gekennzeichnet, dass**
die erste Bauteilgruppe (1) so konfiguriert ist, dass
die Schaltung (1.5), ausgelöst durch das Auftreten des Spannungspulses (II), mit einer Spannung einer Spannungsquelle (1.7) beaufschlagt wird und der Impulsdraht (1.1) zur Spannungsquelle (1.7) parallel geschaltet ist, so dass der Spannungspuls (II) des Impulsdrahts (1.1) zur Energieversorgung der Schaltung (1.5) beiträgt, und die Schaltung (1.5) spätestens nach dem Speichern der Positionsinformation (P) im nicht-flüchtigen Speicher (1.52) von der Spannungsquelle (1.7) wieder getrennt wird.

8. Verfahren gemäß dem Anspruch 7, **dadurch gekennzeichnet, dass** die die erste Bauteilgruppe (1) einen Emitter (1.11; 1.11') umfasst, durch welchen ein elektromagnetisches Feld erzeugt wird, das durch das zumindest eine Codeelement (2.21; 2.21') moduliert wird, so dass abhängig von der Relativposition des Codeelements (2.21; 2.21') zu dem zumindest einen Detektor (1.211, 1.212; 1.211'; 1.212') von diesem ein Signal (Σ_{1.211}, Σ_{1.222}; Σ_{1.211}', Σ_{1.222}') erzeugt wird, wobei das Auftreten des Spannungspulses (Π) auslöst, dass der Emitter (1.11; 1.11') mit einer Spannung einer Spannungsquelle (1.7) beaufschlagt wird und der Emitter (1.11; 1.11') spätestens nach dem Speichern der Positionsinformation (P) im nicht-flüchtigen Speicher (1.52) von der Spannungsquelle (1.7) wieder getrennt wird.

9. Verfahren gemäß dem Anspruch 8, **dadurch gekennzeichnet, dass** der Emitter (1.11) eine Erregerwindung umfasst, durch die ein elektromagnetisches Feld erzeugt wird und der zumindest eine Detektor (1.211; 1.212) als eine Empfängerwindung ausgestaltet ist.

10. Verfahren gemäß dem Anspruch 8, **dadurch gekennzeichnet, dass** der Emitter (1.11') eine Lichtquelle umfasst, und der zumindest eine Detektor (1.211'; 1.212') als ein Fotoelement ausgestaltet ist.

11. Verfahren gemäß dem Anspruch 7, **dadurch gekennzeichnet, dass** das Auftreten des Spannungspulses (II) auslöst, dass der zumindest eine Detektor (1.211", 1.212") mit einer Spannung einer Spannungsquelle (1.7) beaufschlagt wird und danach von der Spannungsquelle (1.7) wieder getrennt wird.

12. Verfahren gemäß einem der Ansprüche 7 bis 11, **dadurch gekennzeichnet, dass** das zumindest eine Codeelement (2.21") als ein Magnet ausgestaltet ist und der zumindest eine Detektor (1.211", 1.212") ein MR- oder Hall-Element ist.

## Claims

1. Rotary encoder comprising a first component group (1) and a second component group (2), wherein the component groups (1, 2) are arranged so that they can rotate with respect to one another about an axis (A), and
the first component group (1) has
• a pulse wire (1.1),
• at least one detector (1.211, 1.212; 1.211', 1.212'; 1.211", 1.212"), and
• an electronic circuit (1.5) with a logic circuit (1.51) and a non-volatile memory (1.52),
the second component group (2) has
• a magnet (2.23) and
• at least one code element (2.21; 2.21'; 2.21"), wherein when the magnet (2.23) approaches the pulse wire (1.1) a voltage pulse (II) can be generated by the pulse wire (1.1), and
as a function of the relative position of the code element (2.21; 2.21'; 2.21") with respect to the at least one detector (1.211, 1.212; 1.211', 1.212'; 1.211", 1.212") the latter can generate a signal (Σ_{1.211}, Σ_{1.222}; Σ_{1.211}', Σ_{1.222}'; Σ_{1.211}", Σ_{1.222}"), wherein a position information item (P), which can be stored in the non-volatile memory (1.52), can be determined by means of the logic circuit (1.51), on the basis of the signal (Σ_{1.211}, Σ_{1.222}; Σ_{1.211}', Σ_{1.222}'; Σ_{1.211}", Σ_{1.222}"), **characterized in that** the first component group (1) is configured in such a way that a voltage of a voltage source (1.7) can be applied to the circuit (1.5), triggered by the occurrence of the voltage pulse (II), wherein the pulse wire (1.1) is connected in parallel with the voltage source (1.7) with the result that the voltage pulse (II) of the pulse wire (1.1) contributes to the energy supply of the circuit (1.5), and the circuit (1.5) can be disconnected again from the voltage source (1.7) at the latest after the storage of the position information item (P) in the non-volatile memory (1.52).

2. Rotary encoder according to Claim 1, **characterized in that** the first component group (1) comprises an emitter (1.11; 1.11') by means of which it is possible to generate an electromagnetic field which can be modulated by means of the at least one code element (2.21; 2.21'), with the result that as a function of the relative position of the code element (2.21; 2.21') with respect to the at least one detector (1.211, 1.212; 1.211'; 1.212') the latter can generate a signal (Σ_{1.211}, Σ_{1.222}; Σ_{1.211}', Σ_{1.222}';), wherein the first component group (1) is configured in such a way that
• a voltage of the voltage source (1.7) can be applied to the emitter (1.11; 1.11') triggered by the occurrence of the voltage pulse (II), and
• the emitter (1.11; 1.11') can be disconnected again from the voltage source (1.7) at the latest after the storage of the position information item (P) in the non-volatile memory (1.52).

3. Rotary encoder according to Claim 2, **characterized in that** the emitter (1.11) comprises an exciter winding by means of which an electromagnetic field can be generated, and the at least one detector (1.211, 1.212) is configured as a receiver winding.

4. Rotary encoder according to Claim 2, **characterized in that** the emitter (1.11') comprises a light source, and the at least one detector (1.211'; 1.212') is configured as a photo element.

5. Rotary encoder according to Claim 1, **characterized in that** the first component group (1) is configured in such a way that a voltage of a voltage source (1.7) can be applied to the at least one detector (1.211", 1.212") triggered by the occurrence of the voltage pulse (II), and said detector (1.211", 1.212") can be disconnected from the voltage source (1.7) again.

6. Rotary encoder according to Claim 5, **characterized in that** the at least one code element (2.21") is configured as a magnet, and the at least one detector (1.211", 1.212") is an MR element or Hall element.

7. Method for operating a rotary encoder, wherein the rotary encoder comprises a first component group (1) and a second component group (2), and the component groups (1, 2) are arranged so that they can rotate with respect to one another about an axis (A), and
the first component group (1) has
• a pulse wire (1.1),
• at least one detector (1.211, 1.212; 1.211', 1.212'; 1.211", 1.212"), and
• an electronic circuit (1.5) with a logic circuit (1.51) and a non-volatile memory (1.52),
the second component group (2) has
• a magnet (2.23) and
• at least one code element (2.21; 2.21'; 2.21"), wherein when the magnet (2.23) approaches the pulse wire (1.1) a voltage pulse (II) is generated by the pulse wire (1.1), and
as a function of the relative position of the code element (2.21; 2.21'; 2.21") with respect to the at least one detector (1.211, 1.212; 1.211', 1.212'; 1.211", 1.212") the latter can generate a signal (Σ_{1.211}, Σ_{1.222}; Σ_{1.211}', Σ_{1.222}'; Σ_{1.211}", Σ_{1.222}"), wherein a position information item (P), which is stored in the non-volatile memory (1.52), is determined by means of the logic circuit (1.51), on the basis of the signal (Σ_{1.211}, Σ_{1.222}; Σ_{1.211}', Σ_{1.222}'; Σ_{1.211}", Σ_{1.222}"), **characterized in that** the first component group (1) is configured in such a way that a voltage of a voltage source (1.7) is applied to the circuit (1.5), triggered by the occurrence of the voltage pulse (II), and the pulse wire (1.1) is connected in parallel with the voltage source (1.7) with the result that the voltage pulse (II) of the pulse wire (1.1) contributes to the energy supply of the circuit (1.5), and the circuit (1.5) is disconnected again from the voltage source (1.7) at the latest after the storage of the position information item (P) in the non-volatile memory (1.52).

8. Method according to Claim 7, **characterized in that** the first component group (1) comprises an emitter (1.11; 1.11') by means of which it is possible to generate an electromagnetic field which is modulated by means of the at least one code element (2.21; 2.21'), with the result that as a function of the relative position of the code element (2.21; 2.21') with respect to the at least one detector (1.211, 1.212; 1.211'; 1.212') the latter can generate a signal (Σ_{1.211}, Σ_{1.222}; Σ_{1.211}', Σ_{1.222}';), wherein the occurrence of the voltage pulse (II) triggered the application of a voltage of a voltage source (1.7) to the emitter (1.11; 1.11'), and causes the emitter (1.11; 1.11') to be disconnected again from the voltage source (1.7) at the latest after the storage of position information item (P) in the non-volatile memory (1.52).

9. Method according to Claim 8, **characterized in that** the emitter (1.11) comprises an exciter winding by means of which an electromagnetic field is generated and the at least one detector (1.211; 1.212) is configured as a receiver winding.

10. Method according to Claim 8, **characterized in that** the emitter (1.11') comprises a light source, and the at least one detector (1.211'; 1.212') is configured as a photo element.

11. Method according to Claim 7, **characterized in that** the occurrence of the voltage pulse (II) triggers the application of a voltage of a voltage source (1.7) to the at least one detector (1.211", 1.212"), and after this causes the detector (1.211", 1.212") to be disconnected from the voltage source (1.7) again.

12. Method according to one of Claims 7 to 11, **characterized in that** the at least one code element (2.21") is configured as a magnet, and the at least one detector (1.211", 1.212") is an MR element or Hall element.

## Revendications

1. Codeur rotatif comprenant un premier groupe de composants (1) et un deuxième groupe de composants (2), les groupes de composants (1, 2) étant disposés de manière à pouvoir effectuer une rotation relative l'un par rapport à l'autre autour d'un axe (A), et
le premier groupe de composants (1) présentant
* un fil d'impulsion (1.1),
* au moins un détecteur (1.211, 1.212 ; 1.211', 1.212' ; 1.211", 1.212") ainsi que
* un circuit électronique (1.5) doté d'un circuit logique (1.51) et d'une mémoire non volatile (1.52),
le deuxième groupe de composants (2) présentant
* un aimant (2.23) et
* au moins un élément de codage (2.21 ; 2.21' ; 2.21"),
une impulsion de tension (II) pouvant être générée par le fil d'impulsion (1.1) en approchant l'aimant (2.23) du fil d'impulsion (1.1), et
suivant la position relative de l'élément de codage (2.21 ; 2.21' ; 2.21") par rapport à l'au moins un détecteur (1.211, 1.212 ; 1.211', 1.212' ; 1.211", 1.212"), un signal (Σ_{1.211}, Σ_{1.222} ; Σ_{1.211'}, Σ_{1.222'} ; Σ_{1.211"}, Σ_{1.222"}) pouvant être généré par celui-ci, une information de position (P) pouvant être déterminée par le circuit logique (1.51) en se basant sur le signal (Σ_{1.211}, Σ_{1.222} ; Σ_{1.211'}, Σ_{1.222'} ; Σ_{1.211"}, Σ_{1.222"}), laquelle peut être enregistrée dans la mémoire non volatile (1.52), **caractérisé en ce que**
le premier groupe de composants (1) est configuré de telle sorte que
le circuit (1.5), déclenché par l'apparition de l'impulsion de tension (Π), peut être chargé avec une tension d'une source de tension (1.7), le fil d'impulsion (1.1) étant branché en parallèle avec la source de tension (1.7) de sorte que l'impulsion de tension (Π) du fil d'impulsion (1.1) contribue à l'alimentation en énergie du circuit (1.5), et le circuit (1.5) peut de nouveau être déconnecté de la source de tension (1.7) au plus tard après l'enregistrement de l'information de position (P) dans la mémoire non volatile (1.52).

2. Codeur rotatif selon la revendication 1, **caractérisé en ce que** le premier groupe de composants (1) comprend un émetteur (1.11 ; 1.11') par le biais duquel peut être généré un champ électromagnétique, lequel peut être modulé par l'au moins un élément de codage (2.21 ; 2.21'), de sorte que suivant la position relative de l'élément de codage (2.21 ; 2.21') par rapport à l'au moins un détecteur (1.211, 1.212 ; 1.211', 1.212'), un signal (Σ_{1.211}, Σ_{1.222} ; Σ_{1.211'}, Σ_{1.222'}) peut être généré par celui-ci, le premier groupe de composants (1) étant configuré de telle sorte que l'émetteur (1.11 ; 1.11')
* déclenché par l'apparition de l'impulsion de tension (Π), peut être chargé avec une tension d'une source de tension (1.7), et
* peut de nouveau être déconnecté de la source de tension (1.7) au plus tard après l'enregistrement de l'information de position (P) dans la mémoire non volatile (1.52).

3. Codeur rotatif selon la revendication 2, **caractérisé en ce que** l'émetteur (1.11) comprend un enroulement excitateur par le biais duquel peut être généré un champ électromagnétique et l'au moins un détecteur (1.211, 1.212) est réalisé sous la forme d'un enroulement récepteur.

4. Codeur rotatif selon la revendication 2, **caractérisé en ce que** l'émetteur (1.11') comprend une source de lumière, et l'au moins un détecteur (1.211', 1.212') est réalisé sous la forme d'un élément photoélectrique.

5. Codeur rotatif selon la revendication 1, **caractérisé en ce que** le premier groupe de composants (1) est configuré de telle sorte que l'au moins un détecteur (1.211", 1.212"), déclenché par l'apparition de l'impulsion de tension (Π), peut être chargé avec une tension d'une source de tension (1.7) et peut de nouveau être déconnecté de la source de tension (1.7).

6. Codeur rotatif selon la revendication 5, **caractérisé en ce que** l'au moins un élément de codage (2.21") est réalisé sous la forme d'un aimant et l'au moins un détecteur (1.211", 1.212") est un élément MR ou à effet Hall.

7. Procédé de fonctionnement d'un codeur rotatif, le codeur rotatif comprenant un premier groupe de composants (1) et un deuxième groupe de composants (2), et les groupes de composants (1, 2) étant disposés de manière à pouvoir effectuer une rotation relative l'un par rapport à l'autre autour d'un axe (A), et
le premier groupe de composants (1) présentant
* un fil d'impulsion (1.1),
* au moins un détecteur (1.211, 1.212 ; 1.211', 1.212' ; 1.211", 1.212") ainsi que
* un circuit électronique (1.5) doté d'un circuit logique (1.51) et d'une mémoire non volatile (1.52),
le deuxième groupe de composants (2) présentant
* un aimant (2.23) et
* au moins un élément de codage (2.21 ; 2.21' ; 2.21"),
une impulsion de tension (Π) étant générée par le fil d'impulsion (1.1) en approchant l'aimant (2.23) du fil d'impulsion (1.1), et
suivant la position relative de l'élément de codage (2.21 ; 2.21' ; 2.21") par rapport à l'au moins un détecteur (1.211, 1.212 ; 1.211', 1.212' ; 1.211", 1.212"), un signal (Σ_{1.211}, Σ_{1.222} ; Σ_{1.211'}, Σ_{1.222'} ; Σ_{1.211"}, Σ_{1.222"}) étant généré par celui-ci, une information de position (P) étant déterminée par le circuit logique (1.51) en se basant sur le signal (Σ_{1.211}, Σ_{1.222} ; Σ_{1.211'}, Σ_{1.222'} ; Σ_{1.211"}, Σ_{1.222"}), laquelle est enregistrée dans la mémoire non volatile (1.52), **caractérisé en ce que** le premier groupe de composants (1) est configuré de telle sorte que
le circuit (1.5), déclenché par l'apparition de l'impulsion de tension (Π), est chargé avec une tension d'une source de tension (1.7) et le fil d'impulsion (1.1) est branché en parallèle avec la source de tension (1.7) de sorte que l'impulsion de tension (II) du fil d'impulsion (1.1) contribue à l'alimentation en énergie du circuit (1.5), et le circuit (1.5) est de nouveau déconnecté de la source de tension (1.7) au plus tard après l'enregistrement de l'information de position (P) dans la mémoire non volatile (1.52).

8. Procédé selon la revendication 7, **caractérisé en ce que** le premier groupe de composants (1) comprend un émetteur (1.11 ; 1.11') par le biais duquel est généré un champ électromagnétique, lequel est modulé par l'au moins un élément de codage (2.21 ; 2.21'), de sorte que suivant la position relative de l'élément de codage (2.21 ; 2.21') par rapport à l'au moins un détecteur (1.211, 1.212 ; 1.211', 1.212'), un signal (Σ_{1.211}, Σ_{1.222} ; Σ_{1.211'}, Σ_{1.222'}) est généré par celui-ci, l'apparition de l'impulsion de tension (Π) déclenchant le fait que l'émetteur (1.11 ; 1.11') est chargé avec une tension d'une source de tension (1.7), et l'émetteur (1.11 ; 1.11') est de nouveau déconnecté de la source de tension (1.7) au plus tard après l'enregistrement de l'information de position (P) dans la mémoire non volatile (1.52).

9. Procédé selon la revendication 8, **caractérisé en ce que** l'émetteur (1.11) comprend un enroulement excitateur par le biais duquel est généré un champ électromagnétique et l'au moins un détecteur (1.211, 1.212) est réalisé sous la forme d'un enroulement récepteur.

10. Procédé selon la revendication 8, **caractérisé en ce que** l'émetteur (1.11') comprend une source de lumière, et l'au moins un détecteur (1.211', 1.212') est réalisé sous la forme d'un élément photoélectrique.

11. Procédé selon la revendication 7, **caractérisé en ce que** l'apparition de l'impulsion de tension (Π) déclenche le fait que l'au moins un détecteur (1.211", 1.212'') est chargé avec une tension d'une source de tension (1.7) et est ensuite de nouveau déconnecté de la source de tension (1.7).

12. Procédé selon l'une des revendications 7 à 11, **caractérisé en ce que** l'au moins un élément de codage (2.21") est réalisé sous la forme d'un aimant et l'au moins un détecteur (1.211", 1.212") est un élément MR ou à effet Hall.
